# EUROPÄISCHE PATENTANMELDUNG

(11) **EP 0 933 121 A1**
(43) Veröffentlichungstag der Anmeldung: **04.08.1999**
(21) Anmeldenummer: 99810071.3
(22) Anmeldetag: 28.01.1999
(51) Int. Cl.: B01D 53/84, B01D 53/44, B01D 53/70, B01D 53/72

(54) **Verfahren zur biologischen Behandlung flüchtiger organischer Komponenten in Gasemissionen**

(30) Priorität: 29.01.1998 CH 21298
(71) Anmelder: Rohner AG, 4133 Pratteln (CH)
(72) Erfinder: Péringer, Paul, 1028 Préverenges (CH); Kneubühler, Werner, 4461 Böckten (CH)
(74) Vertreter: Zimmermann, Hans, Dr.

(57) **Zusammenfassung**

In einem Verfahren zur biologischen Behandlung von Gasemissionen werden nicht biofiltergängige Verbindungen an einem Adsorber 2 und wasserlösliche organische Verbindungen in einem Wäscher 3 entfernt, die Gasemissionen, die bioabbaubare, nicht chlorierte Verbindungen enthalten, und die Gasemissionen, die bioabbaubare chlorierte Verbindungen enthalten, je in einen Abluftstrom zusammengefasst und über je einen Biorieselbettreaktor 8B,8C mit adaptierten Mikroorganismen gereinigt, wobei den Biorieselbettreaktoren regelmässig adaptierte Mikroorganismen zugeführt werden. Mit diesem Verfahren können mehrere Gasemissionen auf effiziente und ökonomische Weise behandelt und eine rasche Umstellung der Biologie auf wechselnde Abluftinhaltsstoffe gewährleistet werden.

## Beschreibung

Die Erfindung betrifft ein Verfahren zur biologischen Behandlung von Gasemissionen aus chemischen Produktionseinheiten, aus denen unterschiedliche flüchtige organische Verbindungen als Emissionen anfallen, sowie eine Anordnung zur Durchführung dieses Verfahrens.

Der Einsatz von Biosystemen in der Abluftreinigung ist bekannt; beispielsweise finden Biosysteme Verwendung bei der Geruchsbeseitigung, in Abwasserreinigungsanlagen, in Lackierbetrieben und Druckereien. Gemäss dem gegenwärtigen Stand der Technologie werden in der biologischen Reinigung gasförmiger Emissionen drei Typen von Biosystemen verwendet: Biowäscher, Biofilter und Tropfkörperbioreaktoren.

Biowäscher (bioscrubber) werden im wesentlichen zur Behandlung wasserlöslicher Verbindungen mittels Mikroorganismen verwendet, die in Form eines Belebtschlammes oder in immobilisiertem Zustand vorliegen können. Das Verfahren umfasst die Absorption der löslichen gasförmigen Schadstoffe im Wasser, gefolgt von ihrer Oxidation in flüssiger Phase.

In Biowäschern auf der Basis von Belebtschlämmen erfolgt die Absorption in einer Waschkolonne mit Trägern, oder das Gas wird im Gegenstrom durch die Mischung aus Wasser und Belebtschlamm geleitet. Der Bioabbau des absorbierten Gases findet in einem getrennten Dekanteur mit Hilfe der im Belebtschlamm enthaltenen Mikroorganismen statt. Das behandelte Wasser wird in die Waschkolonne zurückgeleitet.

In Biowäschern mit fixierter Biomasse werden die gasförmigen Schadstoffe zuerst im Wasser absorbiert. Das derart beladene Wasser wird anschliessend an der Oberfläche eines Tropfkörperbioreaktors (trickling filter) dispergiert, wo die gelösten Schadstoffe mit Hilfe der auf den Trägerkörpern des Bioreaktors fixierten Mikroorganismen oxidiert werden.

Biofilter verwenden immobilisierte Mikroorganismen auf natürlichen organischen Trägern wie Kompost, Torf, Rinde und dergleichen, allenfalls zusammen mit synthetischen Partikeln (wie Polystyrol oder Polyvinylchlorid) oder inerten Materialien (wie Ton, Aktivkohle oder Puzzolanerde). Diese im Behälter als Bett angeordneten Träger werden im allgemeinen im Aufstrom durch ein Gemisch künstlich befeuchteter Luft und des zu behandelnden Gases durchströmt. Die Biofilter eignen sich zur Reinigung niedriger Konzentrationen an flüchtigen organischen Verbindungen mit wenig schwankender Zusammensetzung und Konzentration, wie sie bei der Behandlung von Gerüchen angetroffen werden.

Tropfkörperbioreaktoren (biological trickling filters), auch als Biorieselbettreaktoren oder Perkolationsbiofilter bezeichnet, verwenden immobilisierte Mikroorganismen auf partikelförmigen oder strukturierten, mineralischen oder synthetischen Trägern. Die als Festbett bzw. Festbette angeordneten Träger werden durch ein Gemisch aus Luft und dem zu behandelnden Gas im Gegenstrom oder im Gleichstrom zum Rieselwasser durchströmt. Der Fluss des Rieselwassers resultiert aus der dauernden Rezirkulation der Perkolationsflüssigkeit auf die Träger von einem Reservoir, in dem der pH-Wert reguliert und die Rezirkulationsflüssigkeit mit den für das Wachstum der Mikroorganismen benötigten Nährstoffen angereichert werden kann.

Die neueren Biorieselbettreaktoren sind den einfachen Biofiltern in ihrer Leistung überlegen und können mit höheren Konzentrationen an flüchtigen organischen Verbindungen betrieben werden.

Ein detaillierte Beschreibung des Standes der Technik findet sich in "Praxis der biotechnologischen Abluftreinigung" von R. Margesin, M. Schneider und F. Schinner, Springer-Verlag, Berlin, 1996.

Obwohl somit geeignete Biosysteme grundsätzlich bekannt sind und auch gewisse an bestimmte Schadstoffe adaptierte Mikroorganismen bekannt sind, die im Dauerbetrieb den jeweiligen Schadstoff weitgehend abbauen können, ist der biologische Abbau flüchtiger organischer Verbindungen im Falle von häufig wechselnden Gasemissionen aus multifunktionellen chemischen Produktionsanlagen und im Falle von mehreren Produktionseinheiten, aus denen Gasemissionen mit unterschiedlichen flüchtigen organischen Verbindungen anfallen, bisher nicht befriedigend gelöst.

Der Erfindung liegt daher die Aufgabe zugrunde, ein Verfahren und eine Anordnung bereitzustellen, mit denen ein biologischer Abbau flüchtiger organischer Verbindungen auch im Falle von Gasemissionen aus mehreren und/oder multifunktionellen chemischen Produktionseinheiten in befriedigender und ökonomischer Weise möglich wird.

Die Aufgabe wird erfindungsgemäss gelöst durch ein Verfahren zur gemeinsamen biologischen Behandlung der Gasemissionen aus mehreren und/oder multifunktionellen chemischen Produktionseinheiten, aus denen unterschiedliche flüchtige organische Verbindungen als Emissionen anfallen, welches dadurch gekennzeichnet ist, dass man die Gasemissionen an jeder Produktionseinheit separat erfasst und dass man
a) Gasemissionen A, die eine toxische, nicht oder nur schwer bioabbaubare flüchtige organische Verbindung enthalten, in einem Adsorber an einem zur Adsorption dieser Verbindung geeigneten Material adsorbiert,
b) Gasemissionen D, die eine wasserlösliche, leicht bioabbaubare organische Verbindung enthalten, durch einen Wäscher leitet, um die organische Verbindung mit Wasser auszuwaschen,
c) Gasemissionen B, die eine bioabbaubare, nicht chlorierte organische Verbindung enthalten, zusammenführt und über einen gemeinsamen Abluftstrang zusammen mit Luft in einen ersten Biorieselbettreaktor leitet, in welchem ein Biofilm aus mindestens einem zum Abbau der nicht chlorierten organischen Verbindung geeigneten Mikroorganismus auf einem inerten Trägermaterial angesiedelt ist, und
d) Gasemissionen C, die eine bioabbaubare, chlorierte organische Verbindung enthalten, zusammenführt und über einen gemeinsamen Abluftstrang zusammen mit Luft in einen zweiten Biorieselbettreaktor leitet, in welchem ein Biofilm aus mindestens einem zum Abbau der chlorierten organischen Verbindung geeigneten Mikroorganismus auf einem inerten Trägermaterial angesiedelt ist,
wobei das Verfahren ferner dadurch gekennzeichnet ist, dass in jedem der beiden Biorieselbettreaktoren zur Behandlung der Gasemissionen B bzw. C
e) das Trägermaterial und der Biofilm im Abstrom kontinuierlich mit Perkolationswasser berieselt werden,
f) das abfliessende Perkolationswasser als Pumpensumpf gesammelt und über eine zum oberen Ende des Biorieselbettreaktors führende Leitung mit Umwälzpumpe rezykliert wird,
g) dem Perkolationswasser je nach Bedarf Nährstoffe zudosiert werden und
h) dem Perkolationswasser des ersten und zweiten Biorieselbettreaktors regelmässig Mikroorganismen zudosiert werden, die auf den Abbau der nicht chlorierten bzw. chlorierten organischen Verbindung spezialisiert sind.

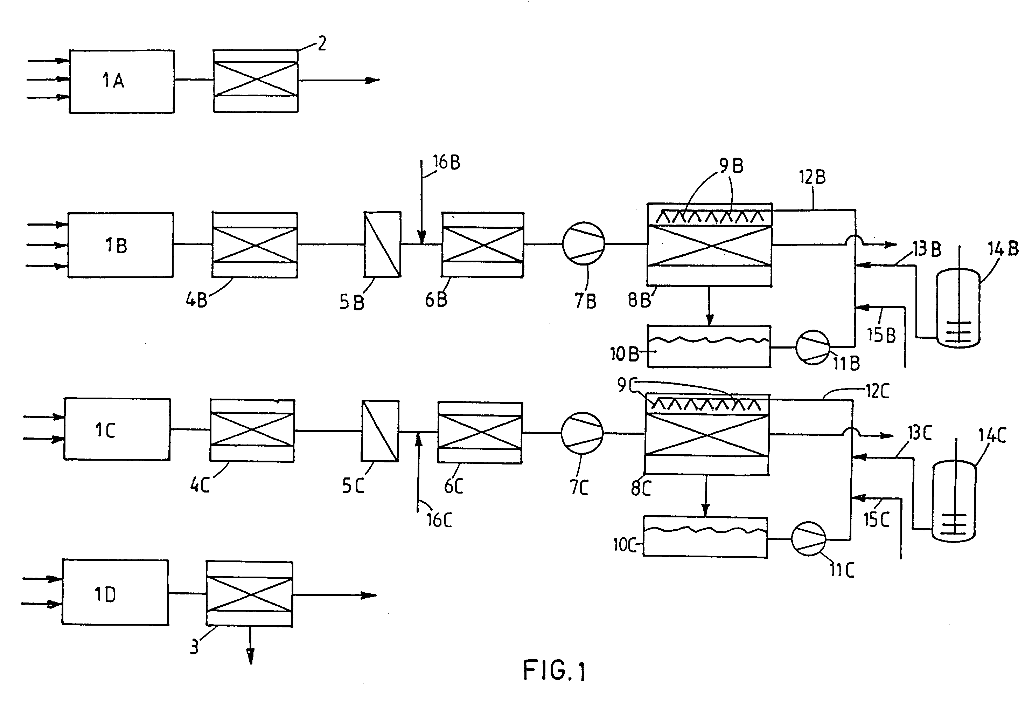

Fig. 1 illustriert das Prinzip des erfindungsgemässen Verfahrens anhand einer schematische Darstellung einer bevorzugte Anordnung.

Wie nachfolgend ausführlicher erläutert wird, ermöglicht die Erfindung sowohl den gleichzeitigen effizienten Abbau mehrerer flüchtiger organischer Verbindungen, wie sie in Gasemissionen chemischer Prozesse typischerweise anfallen, mit vergleichsweise geringem Aufwand als auch eine rasche Umstellung der Biologie im Falle eines Wechsels der Produktionsverfahren. Dieses Ergebnis kann zudem mit relativ geringen Investitionskosten erreicht werden, die erheblich geringer sind als bei thermischer Abluftreinigung. Das erfindungsgemässe Verfahren wird ferner auch durch die bei chemischen Prozessen oft auftretenden, stark fluktuierenden Mengen und Zusammensetzungen der emittierten organischen Verbindungen in seiner Wirksamkeit kaum beeinträchtigt. Überdies kann der Energieverbrauch reduziert werden, und der Ausstoss an Kohlendioxid geht auf ein Minimum zurück.

Aufgrund dieser Vorteile ist die Anwendbarkeit des erfindungsgemässen Verfahrens nicht auf die Behandlung von Gasemissionen aus chemischen Produktionen beschränkt, sondern generell zur Behandlung von Gasemissionen vorteilhaft, bei denen organische Verbindungen in stark fluktuierenden Mengen und Zusammensetzungen auftreten.

Das erfindungsgemässe Verfahren basiert auf der Technologie des Biorieselbettreaktors, unterscheidet sich aber von den bekannten Verfahren insbesondere in der Erfassung und der biologischen Behandlung einer Mehrzahl von Gasemissionen ab. Vorzugsweise wird der biologischen Behandlungsstufe im Biorieselbettreaktor ferner eine Aufarbeitung der Gasgemische vorgeschaltet, um die Wirkung des biologischen Abbaustufe zu optimieren. Mit der biologischen Behandlung verknüpft ist die regelmässige Zudosierung spezialisierter Mikroorganismen, die vorzugsweise in einer parallelen Fermentation produziert werden können und die sowohl die Wirksamkeit und Stabilität der biologischen Behandlungsstufe sicherstellen als auch deren rasche Anpassung an eine Veränderung der Gasemissionen erleichtern.

In einem ersten Schritt des erfindungsgemässen Verfahrens werden die Gasemissionen an der Emissionsquelle (Rührkessel, Vorlagenbehälter, Vakuumpumpen etc.) erfasst und je nach Art der flüchtigen organischen Verunreinigung einer von vier Behandlungsmethoden unterworfen. Mit diesem Vorgehen kann eine beträchtliche Vereinfachung der Gesamtbehandlung von Gasgemischen erreicht werden, insbesondere wenn eine Vielzahl von Gasemissionen zu behandeln sind. Da die bei chemischen Produktionsverfahren entstehenden Gasemissionen in der Regel nur eine flüchtige organische Verbindung in wesentlichen Konzentrationen enthalten, eignen sich praktisch alle anfallenden Gasgemische zur Behandlung nach diesem Verfahren.

Da sich die Art der an einer Emissionsquelle anfallenden flüchtigen organischen Verbindung in der Regel nur dann ändert, wenn eine Produktionseinheit auf ein anderes Verfahren umgestellt wird, kann die Erfassung der Gasemissionen in einfacher Weise dadurch erfolgen, dass jede Emissionsquelle an vier Abluftleitungen für die oben definierten Klassen A-D von Gasemissionen angeschlossen ist und bei Produktionsumstellung jeweils die passende Abluftleitung geöffnet und die anderen drei geschlossen werden, womit die Abluft über die entsprechende offene Leitung abgesaugt werden kann.

Die optimale Behandlungsart der Gasemissionen ist abhängig von den physikochemischen und biologischen Eigenschaften der Abluftinhaltsstoffe, wie Hydrophobizität, Verteilungskoeffizient, chemische Struktur (aromatisch oder aliphatisch, substituiert oder unsubstituiert, funktionelle Gruppen), Bioabbaubarkeit, Toxizität, Cometabolismus und dergleichen. Es kann daher in gewissen Fällen von Vorteil sein, eine nicht chlorierte Verbindung zusammen mit chlorierten zu behandeln, oder eine separate Erfassung und Behandlung von Schwefelverbindungen vorzusehen. Es hat sich jedoch gezeigt, dass zur Behandlung mehrerer unterschiedlicher Gasemissionen praktisch immer der Einsatz von zwei Biorieselbettreaktoren mit unterschiedlichen Mikroorganismenpopulationen angezeigt und ausreichend ist. Ferner hat sich gezeigt, dass die oben definierte Einteilung in vier Klassen A-D als generelles Schema zur Behandlung praktisch beliebiger Gasemissionen am besten geeignet ist, insbesondere wenn auf den Biorieselbettreaktoren gemischte Mikroorganismenpopulationen eingesetzt werden. Zudem können nach diesem Behandlungsschema alle flüchtigen organischen Komponenten eliminiert werden, sei es durch geeignete physikochemische Verfahren oder auf biologischem Wege.

Gemäss dem erfindungsgemässen Verfahren werden nicht oder nur schwer bioabbaubare oder toxische organische Verbindungen, beispielsweise gewisse N-haltige Verbindungen wie Pyridin, Pyrrolidin und Hydrazin, durch physikochemische Verfahren, zweckmässigerweise durch Adsorption, aus dem Abluftstrom eliminiert. Geeignete Spezialstoff-Reinigungseinheiten sind dem Fachmann bestens bekannt und im Handel erhältlich. Vorzugsweise können Adsorber auf der Basis von Aktivkohle verwendet werden. Die Gasemissionen der Klasse A können wahlweise entweder an den Emissionsorten durch separate Adsorber geleitet oder über ein Abluftrohrleitungssystem zusammengeführt und gemeinsam durch einen Adsorber geleitet werden. Die gereinigte Abluft kann der Raumabluft zugeführt werden.

Bioabbaubare, nicht chlorierte organische Verbindungen, wie Benzol, Toluol, Xylol, Ethylbenzol, Styrol und dergleichen, und bioabbaubare chlorierte organische Verbindungen, wie Monochlorbenzol, Dichlorbenzol, Trichlorbenzol, Dichlorethylen, Trichlorethylen, Dichlormethan, Epichlorhydrin und dergleichen, werden an separaten Biorieselbettreaktoren biologisch abgebaut. Zu diesem Zweck werden die Gasemissionen der Klassen B und C je über ein Rohrleitungssystem an der Emissionsquelle erfasst und in einem gemeinsamen Abluftstrang, in dem vorzugsweise geeignete Einrichtungen zur Vorbehandlung des Abluftstromes angeordnet sein können, zusammengeführt und dem zugehörigen Biorieselbettreaktor zugeleitet.

Wasserlösliche, leicht bioabbaubare Verbindungen - beispielsweise Alkohole wie Methanol, Ethanol, Isopropanol, Butylglykol und Methylpropylenglykol, Ketone wie Aceton, Methylethylketon und Isobutylketon und Ester wie Ethylacetat - werden erfindungsgemäss in einem Wäscher mit Wasser ausgewaschen. Die Gasemissionen der Klasse D, die in der Regel problemlos in Abwasserreinigungsanlagen abgebaut werden können, können wahlweise entweder an den Emissionsorten durch separate Wäscher geleitet oder über ein Abluftrohrleitungssystem zusammengeführt und gemeinsam durch einen Wäscher geleitet werden. Die gereinigte Abluft kann an die Umgebung abgegeben werden. Das Waschwasser kann in üblicher Weise einer Abwasserreinigungsanlage zugeführt werden; gewünschtenfalls können die gelösten organischen Verbindungen auch in bekannter Weise an einem Biowäscher, Biofilter oder Biorieselbettreaktor biologisch abgebaut werden.

In den beiden Abluftsträngen für die Gasemissionen B und C kann vorzugsweise ein Wäscher angeordnet werden, in dem die Abluftströme angefeuchtet und neutralisiert und allfällige wasserlösliche Inhaltsstoffe und Staubteilchen ausgewaschen werden. Gewünschtenfalls können an den Emissionsquellen oder im Abluftstrang separate Staubabscheider vorgesehen werden. Das Waschwasser kann gewünschtenfalls filtriert und rezirkuliert werden.

In den beiden Abluftsträngen für die Gasemissionen B und C kann ferner vorzugsweise je ein Wärmeaustauscher angeordnet werden, in dem der Abluftstrom auf die gewünschte Temperatur, vorzugsweise etwa 20 bis 40°C, beispielsweise etwa 30 bis 35°C oder zur Verbesserung der Adsorptionsfähigkeit eines nachgeschalteten Aktivkohlefilters beispielsweise etwa 20 bis 25°C, eingestellt werden kann. Gewünschtenfalls kann anstelle eines einfachen Wärmeaustauschers eine Vorkonditioniereinheit, bestehend aus zwei Wärmeaustauschern, verwendet werden, in der der Gasstrom im ersten Wärmeaustauscher abgekühlt und im zweiten Wärmeaustauscher wieder erwärmt wird, um die relative Feuchtigkeit und die Temperatur des Abluftstromes auf gewünschte Werte einzustellen. Im allgemeinen ist es bevorzugt, den Abluftstrom im ersten Wärmeaustauscher auf etwa 0 bis 10°C, typischerweise etwa 5°C, abzukühlen und im zweiten Wärmeaustauscher auf etwa 20 bis 40°C zu erwärmen. Vorzugsweise ist der Wärmeaustauscher bzw. die Vorkonditioniereinheit einem allenfalls im Abluftstrang angeordneten Wäscher nachgeschaltet.

Da in den Biorieselbettreaktoren ein aerober Abbau der organischen Verbindungen erfolgt, wird den Abluftströmen B und C zweckmässigerweise eine ausreichende Menge Luft (oder alternativ ein anderes sauerstoffhaltiges Gas oder reiner Sauerstoff) beigemischt. Die Luftzufuhr kann grundsätzlich an beliebiger Stelle zwischen der Emissionsquelle und dem Biorieselbettreaktor erfolgen. Vorzugsweise wird jedoch die Luft stromabwärts nach einer allenfalls im Abluftstrang angeordneten Vorkonditioniereinheit bzw. stromaufwärts vor einem allenfalls im Abluftstrang angeordneten Glättungsadsorber zugeführt.

Die Prozessabluftmengen können in ihrem zeitlichen Verlauf oft stark variieren. Da aber andererseits möglichst konstante Durchflussraten für die optimale Funktionsweise des Biorieselbettfilters und eines allenfalls vorhandenen Glättungsadsorbers wichtig sind, wird die Luftzufuhr vorzugsweise so geregelt, dass die Gesamtmenge an Abluft und zugeführter Luft konstant bleibt. Die Steuerung kann beispielsweise anhand einer Druckmessung erfolgen, mit der der statische Druck im Abluftstrang überwacht wird. Verändert sich die Abluftmenge, so verändert sich auch der statische Druck in der Leitung. Um dies auszugleichen, kann über einen Volumenstromregler die zusätzliche Zuluft so geregelt werden, dass der Solldruck wieder erreicht wird.

Infolge der typischen Schwankungen in den Prozessabluftmengen können in den Abluftströmen meist erhebliche Schwankungen um einen Faktor 10 und mehr in den Konzentrationen an flüchtigen organischen Verbindungen auftreten, was nicht nur einen optimalen Betrieb des Biorieselbettfilters beträchtlich erschwert, sondern im Falle von Konzentrationsspitzen die Mikroorganismenpopulation schädigen kann. Um diesen Effekt zu dämpfen, wird in den Abluftsträngen für die Gasemissionen B und D stromabwärts nach der Luftzufuhr vor dem Biorieselbettreaktor ein Adsorber, vorzugsweise ein Behälter mit Aktivkohlegranulat als Adsorptionsmaterial, installiert. Infolge Adsorption und verzögerter Desorption der organischen Verbindungen kann so der Konzentrationsverlauf in den Abluftströmen stark geglättet und damit der Einfluss hoher Fluktuationen in den Gasemissionen erheblich reduziert werden. Um eine gute Wirkung zu erzielen, sollte der Adsorber so dimensioniert werden, dass eine ausreichende Verweilszeit des Abluftstromes im Adsorber von mindestens etwa 3 bis 10 s gewährleistet ist.

Das Absaugen der Gasemissionen kann in bekannter Weise, beispielsweise mittels an geeigneten Stellen angeordneter Ventilatoren, erfolgen. Im Falle der Gasemissionen B und C kann dies vorzugsweise mittels je eines zentralen, unmittelbar vor dem Biorieselbettreaktor angeordneten Ventilators erfolgen.

Der Abbau der Gasemissionen B und C gemäss dem erfindungsgemässen Verfahren basiert auf dem Prinzip der Rieselbiofiltration (trickling biofilter), wo auf einem durch Rieselwasser befeuchteten Träger immobilisierte Mikroorganismen in Gegenwart von Luftsauerstoff die flüchtigen organischen Verbindungen bis auf die Stufe von Kohlendioxid und Wasser abbauen. Zur Durchführung des Verfahrens eignen sich handelsübliche Typen von Biorieselbettreaktoren.

Als Trägermaterialien, auf denen die Biomasse aufwächst, eignen sich übliche inerte Materialien, insbesondere neutrale, chemikalienresistente und nicht bioabbaubare Kunststoffe wie Polyvinylchlorid (ohne Weichmacher). Da der Übergang von der Gasphase in die Flüssigphase der geschwindigkeitslimitierende Faktor ist, werden vorzugsweise Trägermaterialien mit hoher Porosität und spezifischer Oberfläche verwendet. Im allgemeinen ist die Verwendung von Trägermaterialien in Form von geregelten strukturierten Packungen bevorzugt. Um einen raschen Phasenübergang zu gewährleisten, werden vorzugsweise Materialien mit einer spezifischen Oberfläche von mindestens etwa 100 m²/m³, insbesondere mindestens etwa 200 m²/m³, und einem Hohlraumanteil von mindestens etwa 90%, besonders bevorzugt mindestens etwa 95%, verwendet. Geeignete Träger sind bekannt und im Handel erhältlich (z.B. BIOdek-Träger der Firma Munters Euroform, Aachen, Deutschland, ein strukturierter Träger aus Polyvinylchlorid mit einer spezifischen Oberfläche von 240 m²/m³). Der Träger wird in Abhängigkeit der Abluftmengen und der Strömungsgeschwindigkeit der Abluft so dimensioniert, dass eine ausreichende Kontaktzeit mit der Perkolationsflüssigkeit und der Biomasse gewährleistet ist. Vorzugsweise sollte die Verweilzeit der Abluft im Biorieselbettreaktor mindestens etwa 50 s, vorzugsweise mindestens etwa 80 s, betragen. Typische Werte liegen im Bereich von etwa 50-300 s, insbesondere etwa 80-200 s. Vorzugsweise können im Biorieselbettreaktor zwei oder mehrere Stufen strukturierter Packungen angeordnet werden.

Über dem Trägermaterial bzw. über jeder Trägermaterialstufe kann gewünschtenfalls eine Vorrichtung für ein intervallmässiges Abreinigen der Trägermaterialien angeordnet werden, beispielsweise wenn die Biomasse zu stark wächst und damit ein Verstopfen der Packungen auftreten könnte. Dies kann z.B. mittels geeigneter Düsen geschehen, die über Magnetventile angesteuert werden und über die Wasser unter einem Druck von beispielsweise etwa 10-12 bar zugeführt werden kann. Gemäss einer bevorzugten Methode kann jedoch ein Abreinigen der Trägermaterialien in einfacher Weise dadurch erfolgen, dass man die Trägermaterialien mit einer hohen Menge an Schwallwasser, das z.B. über einen Schlauch und eine geeignete Verteildüse mit hoher Strömungsgeschwindigkeit zugeführt werden kann, spült.

Jeder Biorieselbettreaktor ist mit einem Perkolationssystem versehen, über das die Trägermaterialien kontinuierlich im Abstrom mit Perkolationswasser berieselt werden können. Dies kann zweckmässigerweise mittels geeigneter, am Kopfende des Reaktors angeordneter Düsen erfolgen. Das abfliessende Perkolationswasser kann vorzugsweise über eine im Boden des Bioreaktors angeschlossen Leitung in einen separaten Tank (Pumpensumpf) geleitet und von dort mittels einer zu den im Kopfende des Reaktors angeordneten Düsen führenden Leitung, in der eine volumetrische Pumpe angeordnet ist, rezirkuliert werden. Vorzugsweise wird die Perkolationsflüssigkeit so rasch zirkuliert, dass im Trägermaterial ein turbulenter Strömungsverlauf entsteht, wodurch der Massentransfer, insbesondere im Falle hydrophober organischer Verbindungen, deutlich verbessert wird.

Der biologische Abbau kann oftmals zu einer Änderung des pH-Wertes im Perkolationswasser führen. Es ist daher vorteilhaft den pH-Wert des Perkolationswassers, z.B. im Pumpensumpf, zu überwachen und notfalls Lauge oder Säure, beispielsweise verdünnte Natronlauge oder verdünnte Phosphorsäure, zuzudosiern, um den pH-Wert im gewünschten Bereich, beispielsweise etwa 7-8 und vorzugsweise 6,8-7,5, konstant zu halten. Die Lauge oder Säure kann vorzugsweise zum Pumpfensumpf zudosiert werden. Meist empfiehlt es sich ferner, dem Perkolationswasser ein Antischaummittel zuzusetzen. Vorzugsweise kann der Pumpfensumpf ferner mit einer Niveaumessung überwacht werden und überschüssiges Perkolationswasser (z.B. infolge des hohen Rücklaufs bei einem Ausschalten der Kreislaufpumpe) über einen Überlauf abgeleitet werden.

Um das Wachstum der Mikroorganismen zu gewährleisten, sollte eine ausgewogene Nährstoffbilanz sichergestellt werden, und die Ablufttemperatur wie auch die Temperatur des Perkolationswassers sollten in einem Bereich von vorzugsweise etwa 15-30°C liegen, wo die biologische Aktivität möglichst hoch ist. Vorzugsweise werden deshalb dem Perkolationswasserkreislauf in Abhängigkeit von periodischen Analyseergebnissen je nach Bedarf geeignete Nährstoffe (beispielsweise Phosphate, Ammonium-, Natrium- und Kaliumsalze sowie Spurenelemente wie Calcium, Eisen, Mangan, Zink, Bor, Cobalt, Kupfer, Nickel und Molybdän) zudosiert. Dies kann vorzugsweise dadurch erfolgen, dass eine geeignete Nährlösung in den Pumpensumpf oder in die zum Kopfende führende Leitung dosiert wird. Vorzugsweise werden jedoch dem Perkolationswasser keine Kohlenstoffquellen zudosiert, so dass als einzige Kohlenstoffquelle die abzubauenden flüchtigen organischen Verbindungen zu Verfügung stehen.

Die Gasemissionen können im Abstrom oder Aufstrom, d.h. im Gleichstrom oder im Gegenstrom zur Strömungsrichtung des Perkolationswassers, durch den Biorieselbettreaktor geleitet werden. Vorzugsweise sind jedoch die im Kopfende bzw. im unteren Bereich des Bioreaktors angeordneten Ablufteinlass- und -auslasssysteme so ausgebildet, dass die Strömungsrichtung in Intervallen umgekehrt, d.h. die Abluft abwechselnd im Abstrom oder im Aufstrom durch den Bioreaktor geleitet werden kann. Diese Methode ermöglicht eine geringere Verstopfungsanfälligkeit sowie höhere Dichten und eine einheitlichere Verteilung der auf den Trägern fixierten Biomasse, wodurch die Adsorptions- und Abbaugeschwindigkeit der flüchtigen organischen Verbindungen, insbesondere im Bereich geringer Konzentrationen, verbessert wird.

Die Biorieselbettreaktoren werden zu Beginn nach an sich bekannten Methoden mit Mikroorganismen, die zum Abbau der nicht chlorierten bzw. der chlorierten organischen Verbindungen geeignet sind, angeimpft und dann im Laufe des Verfahrens regelmässig ergänzt durch Mikroorganismen, die auf den Abbau der in den Gasemissionen B bzw. C vorhandenen organischen Verbindungen spezialisiert sind. Die regelmässige Ergänzung kann durch Zudosierung zum Perkolationskreislauf, beispielsweise durch Zufuhr einer Mikroorganismensuspension in die vom Pumpensumpf zum Kopfende der Bioreaktors führende Leitung, erfolgen.

Die für die regelmässige Ergänzung benötigten Mikroorganismen können vorzugsweise in einem parallelen Verfahren in separaten Fermentern kontinuierlich produziert werden. Die Fermentationen werden vorzugsweise auf einem Minimalmilieu in Gegenwart der in den Gasemissionen B bzw. C vorhandenen nicht chlorierten bzw. chlorierten organischen Verbindungen als einziger Kohlenstoffquelle durchgeführt, um an die Abluftinhaltsstoffe adaptierte Mikroorganismenpopulationen zu erhalten. Mit dieser Massnahme lässt sich die Anpassung der Biorieselbettreaktoren an wechselnde Abluftinhaltsstoffe erheblich beschleunigen. Die in den Fermentern produzierten Mikroorganismen können vorzugsweise in einen Pufferspeicher übergeführt werden, aus dem sie kontinuierlich oder je nach Bedarf in die Biorieselbettreaktoren eingeführt werden können. Die produzierte Biomasse kann gewünschtenfalls auch durch Zentrifugation oder einfache Sedimentation konzentriert und bei etwa +4°C über mehrere Monate konserviert werden, ohne signifikant an Wirksamkeit zu verlieren. Die laufend produzierte oder konservierte Biomasse kann z.B. in Fällen von Problemen akuter Toxizität, Inhibierung etc. notfalls auch in grösseren Mengen in die Biorieselbettreaktoren eingeführt werden.

Für den Abbau der nicht chlorierten bzw. chlorierten organischen Verbindungen in den Biorieselbettreaktoren geeignete Mikroorganismen, wie beispielsweise Mikroorganismen der Gattungen Pseudomonas, Nocardia, Alcaligenes, Arthrobacter, Xanthobacter, Comamonas, Rhodococcus, Geobacter, Geotrichum, Azoarcus, Sphingomonas, Aeromonas, Corynebacterium und Burkholderia, sind dem Fachman bekannt und sind in der Umwelt weit verbreitet und/oder bei anerkannten Hinterlegungsstellen, wie American Type Culture Collection, Rockville, Maryland, USA (ATCC), DSM-Deutsche Sammlung von Mikroorganismen und Zellkulturen, Braunschweig, Deutschland (DSM) oder Agricultural Research Service Culture Collection, Peoria, Illinois, USA (NRRL), hinterlegt.

Vorzugsweise werden in den Biorieselbettreaktoren und in den Fermentern gemischte Mikroorganismenpopulationen, sogenannte Mikroorganismenkonsortien, verwendet, die auf den Abbau der Abluftinhaltsstoffe spezialisiert sind. Solche spezialisierten Mikroorganismenkonsortien können beispielsweise erhalten werden durch Kombination von reinen Stämmen auf den Abbau einzelner Abluftinhaltsstoffe spezialisierter, nicht pathogener, in öffentlichen oder privaten Sammlungen (z.B. DSM) verfügbarer Bakterien (z.B. Pseudomonas putida 3226, 6537, Pseudomonas GJ1, GJ3, GJ8, GJ 30, GJ 31, GJ 40, Pseudomonas stutzeri, Nocardia GJ 100, Alcaligenes A 175 etc.) oder durch Kombination von reinen Stämmen von Bakterien, die aus einem mit dem Abluftsinhaltsstoff kontaminierten Milieu isoliert wurden und einer geeigneten nicht pathogenen Gattung (z.B. Pseudomonas spp, Alcaligenes spp, Arthrobacter spp, Nocardia spp, Xanthobacter spp, Comamonas spp etc.) angehören.

Für den Abbau chlorierter organischer Verbindungen eignen sich beispielsweise Stämme wie: Pseudomonas putida ATCC 53645, Pseudomonas sp. DSM 6838, Pseudomonas sp. DSM 7116, Pseudomonas sp. NRRL-B-12538, Pseudomonas sp. NRRL-B-12539 und dergleichen. Als Beispiele geeigneter Mikroorganismen für den Abbau nicht chlorierter Verbindungen wie Benzol, Toluol, Xylol, Ethylbenzol etc. können folgende Stämme genannt werden: Pseudomonas putida DSM 548, Pseudomonas putida DSM 6414, Pseudomonas putida DSM 3226, Pseudomonas putida DSM 6413, Pseudomonas putida ATCC 700007, Pseudomonas putida ATCC 700008, Pseudomonas putida ATCC 700007, Pseudomonas putida ATCC 39213, Pseudomonas testosteroni DSM 6577, Pseudomonas fluorescens DSM 6607, Pseudomonas fluorescens DSM 6608, Pseudomonas fluorescens DSM 6609, Pseudomonas stutzeri DSM 6538, Pseudomonas sp. DSM 6611, Pseudomonas sp. DSM 6708, Pseudomonas sp. DSM 6818, Pseudomonas sp. DSM 6838, Pseudomonas sp. DSM 7116, Pseudomonas sp. DSM 6537, Pseudomonas sp. ATCC 51283, Alcaligenes sp. DSM 6610, Comamonas testosteroni ATCC 27911, Xanthobacter sp. DSM 6696, Geobacter metallireducens DSM 7210, Azoarcus tolulyticus ATCC 51758, Sphingomonas sp. DSM 6900, Aeromonas spp. ATCC 55642, Aeromonas spp. ATCC 55641, Corynebacterium sp. ATCC 55643, Zoogloea sp. ATCC 55649, Rhodococcus zopfii ATCC 51349 Rhodococcus zopfii ATCC 51349. Ferner sind auch Mikroorganismen bekannt, die sich speziell für den Abbau von organischen Schwefelverbindungen eignen; beispielsweise werden in EP-A-0 669 155 Mikroorganismen der Gattung Hyphomicrobium für diesen Zweck beschrieben. Weiterhin sind auch für den Abbau wasserlöslicher organischer Verbindungen geeignete Mikroorganismen in grosser Zahl bekannt und dem Fachmann bestens geläufig.

Gemäss einer bevorzugten Methode werden jedoch in der Umwelt vorkommende Mikroorganismen, vorzugsweise gemischte Mikroorganismenpopulationen, verwendet, die aus einem mit dem Abluftinhaltsstoff bzw. den Abluftinhaltsstoffen verunreinigten Milieu, beispielsweise einem Industriegelände oder einer Abwasserreingiungsanlage, gewonnen werden. Die Isolierung und anschliessende Kultivierung der Mikroorganismen kann nach klassischen mikrobiologischen Methoden erfolgen. Vorzugsweise wird die Kultivierung auf einem "Minimalmilieu" (DSM 457) durchgeführt, das neben den abzubauenden Abluftinhaltsstoffen keine weitere Kohlenstoffquelle enthält. Gewünschtenfalls kann die Kultivierung auch in Verbindung mit einer exogenen Quelle wie Methanol oder auf einem Nährstoffmedium von Typ Plate Count Agar (PCA) oder Nutrient Broth (NB) durchgeführt werden.

Solche aus einem kontaminierten Milieu gewonnene Mikroorganismenkonsortien zeichnen sich im allgemeinen durch hohe Wachstumsraten, hohe Widerstandsfähigkeit gegen erhöhte Schadstoffkonzentrationen, Robustheit und leichte Konservierbarkeit aus. Vorzugsweise werden jeweils mehrere derartige Mikroorganismenkonsortien gewonnen und dann das beste ausgewählt aufgrund der Ergebnisse auf einem Labor-Biorieselbettreaktor, auf dem auch die biologischen Parameter (wie maximale Wachstumsrate, Wachstumsausbeute im Vergleich zum Abluftschadstoff und im Vergleich zum gesamten organischen Kohlenstoff, maximale spezifische Atmungs- und Bioabbaugeschwindigkeit, Grad der Bildung ausgeschiedener Zwischenprodukte, Maximalkonzentration der tolerierten Abluftschadstoffe und Sättigungskonstanten) bestimmt werden können.

Die Erfindung betrifft ebenfalls eine Anordnung zur Durchführung des Verfahren wie vorangehend im Zusammenhang mit der Verfahrensbeschreibung erläutert.

Fig. 1 zeigt eine schematische Darstellung eines Beispiels einer bevorzugten Anordnung zur Durchführung des erfindungsgemässen Verfahren. Im gezeigten Beispiel werden drei Gasemissionen der Klasse A, drei Gasemissionen der Klasse B, zwei Gasemissionen der Klasse C und zwei Gasemissionen der Klasse D behandelt. Die Gasemissionen werden an der Emissionsquelle abgesaugt und über Rohrleitungen (symbolisiert durch Pfeile) je nach Klasse der Gasemission in einen von vier Abluftsträngen geleitet. Die Zusammenführung der Gasemissionen der gleichen Klasse ist in der Abbildung durch Rechtecke 1A, 1B, 1C, 1D symbolisiert.

Die Gasemissionen der Klasse A werden durch eine Spezialstoffeinheit 2 geleitet, in welcher die organischen Abluftinhaltsstoffe an Aktivkohle adsorbiert werden. Die gereinigte Abluft kann der Raumabluft zugeführt werden.

Die Gasemissionen der Klasse D werden in einen Wäscher 3 geleitet, in dem die wasserlöslichen organischen Abluftinhaltsstoffe ausgewaschen werden. Die gereinigte Abluft kann an die Umgebung abgegeben werden. Das Waschwasser kann einer Abwasserreinigungsanlage zugeführt oder vor Ort biologisch gereinigt werden.

Die Gasemissionen der Klassen B und C werden separat in analogen Verfahren mit identischen Vorrichtungen weiterbehandelt. In einem ersten Schritt werden die Abluftströme durch einen Wäscher 4B, 4C geleitet, um die Abluft anzufeuchten und allenfalls vorhandene Staubteilchen und wasserlösliche Stoffe (beispielsweise auch biotoxische Stoffe wie Chlorwasserstoff, Ammoniak und Amine) auszuwaschen. Der angefeuchtete Abluftstrom wird über eine Rohrleitung einer Vorkonditioniereinheit 5B, 5C zugeführt, in welcher der Abluftstrom in einem Wärmeaustauscher auf eine Temperatur von vorzugsweise etwa 20 bis 40°C eingestellt oder in welcher der Abluftstrom gewünschtenfalls in einem ersten Wärmeaustauscher abgekühlt (z.B. auf 5°C) und in einem zweiten Wärmeaustauscher auf vorzugsweise etwa 20 bis 40°C erwärmt wird. Auf diese Weise können die relative Feuchtigkeit und die Temperatur des Abluftstromes auf gewünschte Werte eingestellt werden.

Die so vorbehandelte Abluft wird über eine Rohrleitung, die mit einer Zuleitung 16B, 16C zur Zufuhr von Luft versehen ist, einem Adsorber 6B, 6C zugeführt. Um Schwankungen in der Abluftmenge auszugleichen wird vorzugsweise die Zuluft über einen Volumenstromregler in Abhängigkeit des statischen Druckes in der Abluftrohrleitung so geregelt, dass der Solldruck wieder erreicht wird. Im Adsorber 6B, 6C werden organische Abluftinhaltsstoffe an Aktivkohle mindestens teilweise adsorbiert und verzögert wieder desorbiert, womit Fluktuationen in der Konzentration der Abluftinhaltsstoffe abschwächt werden. Die Abluft aus dem Adsorber 6B, 6C wird über eine Rohrleitung dem Biorieselbettreaktor zugeführt; in der Rohrleitung ist ein zentraler Ventilator 7B, 7C zur Absaugung der Gasemissionen der Klassen B bzw. C angeordnet.

Im Biorieselbettreaktor 8B, 8C wird die Abluft im Abstrom, im Aufstrom oder vorzugsweise abwechselnd im Abstrom und im Aufstrom durch ein Trägermaterial mit hoher spezifischer Oberfläche (beispielsweise eine geregelte strukturierte Packung aus PVC) geleitet, auf dem zum Abbau der Abluftinhaltsstoffe geeignete Mikroorganismen angesiedelt sind. Das Trägermaterial wird mittels Düsen 9B, 9C kontinuierlich mit Perkolationswasser berieselt, welches anschliessend über eine Leitung in einen Tank (Pumpensumpf) 10B, 10C fliesst und von dort mittels einer Umwälzpumpe 11B, 11C über eine Rohrleitung 12B, 12C rezirkuliert wird. In der Perkolationswasserleitung 12B, 12C ist eine Zuleitung 15B, 15C für die Zufuhr von Nährstoffen und eine Zuleitung 13B, 13C vorgesehen, über die kontinuierlich oder je nach Bedarf adaptierte Mikroorganismen zugeführt werden können. Die an die Abluftinhaltsstoffe adaptierten Mikroorganismen können in einem parallelen Verfahren in einem Fermenter 14B, 14C produziert und direkt in das Perkolationswasser eingespeist oder - alternativ - in einem Pufferspeicher oder durch Konservierung zwischengelagert werden.

Die Erfindung wird anhand der folgenden Beispiele weiter veranschaulicht.

### Beispiel 1

### a) Versuchanordnung

Zur Durchführung der unten beschriebenen Versuche wurde ein Biorieselbettreaktor (biotrickling filter) mit rechteckigem Querschnitt und einem Volumen vom 0,108 m³ verwendet, in dem als Träger für die Biomasse 0,060 m³ BIOdek-Träger, ein im Handel erhältlicher strukturierter Träger aus Polyvinylchlorid mit einer spezifischen Oberfläche von 240 m²/m³ (Munters Euroform, Aachen, Deutschland), angeordnet wurde. Im Kopfteil des Reaktors wurde ein pneumatisches Sprühsystem (Düse der Firma Lechler, Fellbach, Deutschland) installiert, um neues flüssiges Nährmedium in Form eines sehr feinen Nebels in den Reaktor einbringen zu können. Die Perkolationsflüssigkeit wurde in einem mit einem Überlauf versehenen 28 1-Tank (Pumpensumpf) gesammelt und von dort mit Hilfe einer Zentrifugalpumpe (Little Giant TE-3 MD, Oklahoma City, USA) zum Kopfende des Reaktor rezirkuliert. Der pH-Wert der Perkolationsflüssigkeit wurde, notfalls durch Zugabe von 5M Natronlauge, auf einem Wert von 7,0 konstant gehalten; die Messung des pH-Wertes und die allfällige Zugabe von Natronlauge erfolgte im Pumpensumpf. Dem Reaktor wurde Luft von 7 bar mit einer Durchflussrate von 1500 l/h zugeführt. Die Zufuhr von Toluol und anderen flüchtigen organischen Verbindungen erfolgte durch Stripping nach direkter und kontinuierlicher Injektion (in flüssiger Form) in das Zuleitungsrohr mittels einer genauen und reproduzierbaren Pumpe (Abweichungen < 5%). Um einen allfälligen Druckanstieg infolge Verstopfung des Trägers durch Wachstum der Biomasse rechtzeitig zu erkennen, wurde am Reaktor ein Wassermanometer installiert. Die flüchtigen organischen Verbindungen wurden am Gaseinlass und am Gasauslass mittels GC analysiert. Das Kohlendioxid wurde on-line mittels IR (Siemens Ultramat 22 P, Karlsruhe, Deutschland) bestimmt.

Bei der Durchführung der Versuche wurden - soweit nachfolgend keine anderen Werte angegeben sind - folgende Parameter eingehalten: gesamte volumetrische Gasflussrate = 1080 m³ _{Gas}/m³ _{Träger}.d, theoretische Gasverweilzeit im Träger = 80 sec, Gasflussrate = 30 m/h, Gastemperatur = 27°C, volumetrische Ladung an flüchtigen organischen Verbindungen (VOC) = 0-10 kg_{VOC}/m³ _{Träger}.d, Rezirkulationsgeschwindigkeit der Perkolationsflüssigkeit = 140 l/h.

Die Zufuhr von neuem Nährmedium (ohne Mikroorganismen und ohne Kohlenstoffquelle) erfolgte mittels einer peristaltischen Pumpe aus einem 500 1-Vorratstank in einer Menge von 1,2 l/h. Als Nährmedium wurde einer wässrige Lösung folgender Mineralsalze und Spurenelemente verwendet:

| | |
|---|---|
| K₂HPO₄ | 3,27 g/l |
| NaH₂PO₄.2H₂O | 1,88 g/l |
| (NH₄)₂SO₄ | 3 g/l |
| NH₄NO₃ | 2,25 g/l |
| MgSO₄·7H₂O | 0,2 g/l |
| CaCl₂·2H₂O | 50 mg/l |
| EDTA 2Na·2H₂O | 10 mg/l |
| FeSO₄·7H₂O | 10 mg/l |
| MnCl₂·4H₂O | 1,6 mg/l |
| ZnSO₄·7H₂O | 0,4 mg/l |
| H₃BO₃ | 0,3 mg/l |
| CoCl₂·6H₂O | 0,4 mg/l |
| CuCl₂·2H₂O | 0,4 mg/l |
| NiCl₂·6H₂O | 0,046 mg/l |
| Na₂MoO₄·2H₂O | 0,4 mg/l |

### b) Mikroorganismen

In der Abwasserreinigungsanlage der Gemeinde Schweizerhalle (Schweiz) wurden Proben sowohl aus dem behandelten Abwasser als auch aus dem Schlamm des Biofilters entnommen und die in beiden Proben vorhandenen Mikroorganismenkonsortien zusammen in Bioreaktoren unter Zufuhr von Toluol, Xylol und Ethylbenzol als Kohlenstoffquelle kultiviert. 28 1 der auf diese Weise erhaltenen Mikroorganismensuspension (1 g/l) wurden zur Inokulierung im geschlossenen Biorieselbettreaktor (ohne Gaszufuhr und weitere Flüssigkeitszufuhr) 2 Tage rezirkuliert.

### c) Ergebnisse

Die Kolonisierung des Bioreaktors erfolgte sehr rasch: Bereits nach 1 Monat des kontinuierlichen Betriebs des Biorieselbettreaktors mit Toluol in der Gasphase bei konstanter Beladung mit 0,8 kg_{Toluol}/m³ _{Träger}·d waren die Träger mit etwa 8 kg feuchtem Biofilm bedeckt. Der Wirkungsgrad der biologischen Abbauaktivität erreichte schon 8 Tage nach der Inokulierung 40% und stieg nach 20 Tagen auf 80%.

Die meisten Mikroorganismen des Biofilms waren gramnegative Bakterien und gehörten zu den Spezies Pseudomonas und Burkholderia. Pseudomonas putida war sowohl im Biofilm als auch in den spezialisierten Konsortien, die zur Inokulierung des Bioreaktors verwendet wurden, vorhanden. Ferner wurden im Biofilm auch einige gram-positive Bakterien (Corynebacteriaceae) und Pilze (Geotrichum candidum) gefunden.

Die Leistungsfähigkeit des Biorieselbettreaktors wurde 8 Monate nach Inokulierung und kontinuierlicher Zufuhr von Toluol mit einer Beladung von 1 kg_{Toluol}/m³ _{Träger}·d kontrolliert. Bei langsamer Erhöhung der Beladung von 0 auf 10 kg_{Toluol}/m³ _{Träger}·d wurde bis zu einer Beladung von 3,5 kg_{Toluol}/m³ _{Träger}·d ein Wirkungsgrad von über 80% für den Toluolabbau festgestellt. Die maximale volumetrische Abbaurate betrug etwa 4 kg_{Toluol}/m³ _{Träger}^{.}d. Selbst bei sehr hohen Beladungen mit bis zu 10 kg_{Toluol}/m³ _{Träger}·d wurde keine Hemmung beobachtet. Die erhaltenen Ergebnisse schneiden somit auch im Vergleich mit den Ergebnissen in neueren Literaturstellen äusserst vorteilhaft ab.

Das abgebaute Toluol wurde zu 80% zu Kohlendioxid mineralisiert. Nach 10 Monaten Betrieb wurden etwa 19 kg feuchter Biofilm gewogen, ohne dass irgendein Druckanstieg im Bioreaktor festgestellt wurde und ohne dass irgendwelche Massnahmen zur Kontrolle überschüssiger Biomasse ergriffen worden wären.

Bei raschem Anstieg der Beladung mit Toluol innert weniger Sekunden von 1 auf 7 kg_{Toluol}/m³ _{Träger}·d, wobei der höhere Wert während 100 h aufrechterhalten wurde, konnten keine schädlichen Effekte auf den Biofilm beobachtet werden. Tatsächlich wurde bereits 10 h nach dem raschen Anstieg die gleiche Leistungsfähigkeit festgestellt, wie nach einem langsamen Anstieg. Eine zusätzliche Beladung des Bioreaktors mit einem 75:25-Gemisch von Xylolen und Ethylbenzol (7 kg_{Xylol+Ethylbenzol}/m³ _{Träger}·d) während 40 Stunden ohne vorherige Akklimatisierung der Bakterien an diese Verbindungen reduzierte den Toluol-Abbau nur um 25%. Nach Beendigung der Beladung mit Xylolen und Ethylbenzol war die volle Leistungsfähigkeit des Biofilm zum Abbau von Toluol innert 10 Stunden wiederhergestellt.

### Beispiel 2

Die in Beispiel 1 beschriebene Versuchsanordnung wurde verwendet, um die Eignung des Systems für den Abbau eines Gemisches von Monochlorbenzol und o-Dichlorbenzol zu zeigen. Hierbei wurden die gleichen Methoden und Parameter wie in Beispiel 1 verwendet, mit dem Unterschied, dass anstelle von Toluol oder der gleichzeitigen Beladung mit Toluol, Xylolen und Ethylbenzol ein Gemisch von Monochlorbenzol und o-Dichlorbenzol eingesetzt und zusätzlich eine Leitfähigkeitssonde installiert wurde, um den Anstieg des Salzgehaltes in der Perkolationsflüssigkeit infolge Freisetzung von Chlorid zu verfolgen. Diese Messung erlaubt die Anpassung der Zufuhr an Nährlösung, um die Salzkonzentration auf einem nicht inhibierenden Niveau zu halten. Wie in Beispiel 1 wurden Proben aus dem behandelten Abwasser und aus dem Schlamm des Biofilter der Abwasserreinigungsanlage der Gemeinde Schweizerhalle (Schweiz) verwendet, aber die in den Proben vorhandenen Mikroorganismenkonsortien zusammen in Bioreaktoren unter Zufuhr von Monochlorbenzol und o-Dichlorbenzol als Kohlenstoffquelle kultiviert.

### Beispiel 3

Die Anmelderin betreibt auf ihrem Gelände in einer ersten Ausbaustufe eine Anlage mit zwei parallelen Strängen B und C, wie in Fig. 1 dargestellt, zum biologischen Abbau der nicht wasserlöslichen, nicht chlorierten oder chlorierten organischen Verbindungen der aus den Reaktoren anfallenden Gasemissionen. In dieser Anlage besteht zudem die Möglichkeit, die Abluft aus dem Bioreaktor 8B gewünschtenfalls dem Bioreaktor 8C zuzuführen, wenn nur nicht chlorierte Verbindungen anfallen, bzw. die Abluft aus dem Bioreaktor 8C dem Bioreaktor 8B zuzuführen, wenn nur chlorierte Verbindungen anfallen, um auf diese Weise das nutzbare Trägervolumen und die Verweilzeit im Bioreaktor zu erhöhen.

Die Abgasemissionen werden an den Reaktoren gefasst und über Rohrleitungen je nach Art der Schadstoffe dem Strang B oder C zugeführt, in dem sie zuerst über einen konventionellen zweistufigen Wäscher 4B bzw. 4C mit pH-Steuerung geleitet und von wasserlöslichen Schadstoffen befreit werden. Zwecks Begrenzung der relativen Feuchtigkeit im Rohgas und zur Kompensation der Temperaturerniedrigung im Biofilter wird das Abgas anschliessend in einem mit Dampf betriebenen, handelsüblichen Lamellen-Wärmeaustauscher 5B bzw. 5C auf 30°C vorgewärmt. Danach wird das Abgas über einen Adsorber 6B bzw. 6C, der 800 kg Aktivkohle enthält und mit dem Schadstoff-Konzentrationsspitzen von bis zu etwa 6000 mg/m³ auf Werte von etwa 2000 mg/m³ geglättet werden können, geführt. Das so vorbehandelte Abgas wird über einen drehzahlgeregelten Ventilator 7B bzw. 7C in ein Biofilter 8B bzw. 8C transportiert, wobei es im Aufstrom durch das Biofilter geleitet wird. Als Biofilter werden übliche Biorieselbettreaktoren mit äusseren Abmessungen von 6 m x 2,5 m x 3,5 m und einer Wanddicke von 30 mm verwendet, die als Trägermaterial je zwei Lagen (mit einer Stärke von je 900 mm) geregelter strukturierter Packungen vom Typ BIOdek (Firma Munters Euroform, Aachen, Deutschland) aus Polyvinylchlorid mit einer spezifischen Oberfläche von 240 m²/m³ und einem Hohlraumanteil von 96% enthalten, wobei das Trägervolumen jedes Bioreaktors 25 m³ beträgt. Das Trägermaterial mit der Biomasse wird über ein im Kopfteil des Biorieselbettreaktors angeordnetes pneumatisches Sprühsystem 9B bzw. 9C (Düsen der Firma Lechler, Fellbach, Deutschland) kontinuierlich mit Perkolationswasser berieselt, das mittels einer Umwälzpumpe 11B bzw. 11C über den Pumpensumpf 10B bzw. 10C (3 m³) und eine Rohrleitung 12B bzw. 12C mit einer Geschwindigkeit von ca. 25 m³/h rezirkuliert wird. Über eine Zuleitung 15B bzw. 15C zum Pumpenkreislauf werden dem Perkolationswasser pro Tag 25 1 einer wässrigen Lösung von Ammoniumsulfat (60 g/l) und Dinatriumphosphat (7,5 g/l) zugeführt. Die Temperatur des Perkolationswassers wird auf etwa 25°C konstant gehalten und der pH-Wert, notfalls durch Zugabe von Phosphorsäure oder Natronlauge, im Bereich von 6,8 bis 8,0 gehalten. Die gereinigte Abluft wird über den Kamin an die Umgebung abgegeben.

Zur Gewinnung spezialisierter Mikroorganismenkonsortien wurden Proben aus dem Klärschlamm der Abwasserreinigungsanlage der Gemeinde Schweizerhalle (Schweiz) unter Zufuhr von Toluol, Xylol und Ethylbenzol als einziger Kohlenstoffquelle auf den Abbau nicht chlorierter organischer Verbindungen adaptiert bzw. unter Zufuhr von Monochlorbenzol und Dichlorbenzol als einziger Kohlenstoffquelle auf den Abbau chlorierter organischer Verbindungen adaptiert. Die adaptierten Mikroorganismenkonsortien werden parallel zum Bioabbau der Gasemissionen in separaten Fermentern 14B bzw. 14C bei 30,0 ± 0,5°C und einem pH-Wert von 7,0 ± 0,2 vermehrt, wobei den Fermentern neben den genannten Kohlenstoffquellen jeweils eine Nährlösung folgender Zusammensetzung zugeführt wird:

| | |
|---|---|
| K₂HPO₄ | 3,27 g/l |
| NaH₂PO₄·2H₂O | 1,88 g/l |
| (NH₄)₂SO₄ | 5 g/l |
| MgSO₄·7H₂O | 1 g/l |
| CaCl₂·2H₂O | 50 mg/l |
| EDTA 2Na·2H₂O | 10 mg/l |
| FeSO₄·7H₂O | 10 mg/l |
| MnCl₂·4H₂O | 1,6 mg/l |
| ZnSO₄·7H₂O | 0,4 mg/l |
| H₃BO₃ | 0,3 mg/l |
| CoCl₂·6H₂O | 0,4 mg/l |
| CuCl₂·2H₂O | 0,4 mg/l |
| NiCl₂·6H₂O | 0,046 mg/l |
| Na₂MoO₄·2H₂O | 0,4 mg/l |
| Biotin | 0,02 mg/l |
| p-Aminobenzoesäure | 0,25 mg/l |
| Nikotinsäure | 0,50 mg/l |
| Thiamin·HCl | 0,50 mg/l |
| Ca-Pantothenat | 0,50 mg/l |
| Pyridoxin·HCl | 0,50 mg/l |
| Cyanocobalamin | 0,05 mg/l |
| Riboflavin | 0,20 mg/l |
| Folsäure | 0,10 mg/l |
| Cholinchlorid | 0,50 mg/l |
| Myo-inositol | 2 mg/l |

80% der in den Fermentern erhaltenen Biomasse werden jeweils über eine Zuleitung 13B bzw. 13C zum Pumpenkreislauf dem Bioreaktor 8B bzw. 8C zugeführt, 5% als Reserve zurückbehalten und im Kühlschrank aufbewahrt und 15% für eine weitere Fermentation verwendet. Die Zufuhr von Biomasse (jeweils etwa 6 kg, bezogen auf die Trockenmasse) zu den Bioreaktoren erfolgte anfänglich etwa alle zwei Wochen und später im Abstand von mehreren Wochen. Bei der ersten Inokulierung der Biorieselbettreaktoren wurde die Perkolationsflüssigkeit jeweils ohne Zufuhr von Gasemissionen 2-3 Tage rezirkuliert, um die Ansiedlung der Biomasse auf dem Träger zu erleichtern.

In Pilotversuchen, die in Tabelle 1 als Sequenzen a-f zusammengestellt sind, wurden die anfallenden Abgasemissionen auf der beschriebenen Biofilteranlage behandelt und dabei verschiedene Betriebsarten der Anlage getestet. Auf eine separate Luftzufuhr konnte verzichtet werden, da die Prozessabluft jeweils ausreichend Sauerstoff enthielt.

In der Tabelle steht der Ausdruck "TEX" für Biomassen, die durch Verwendung von Toluol, Ethylbenzol und Xylol als Kohlenstoffquelle an den Abbau von nicht chlorierten organischen Verbindungen adapiert wurden, und der Ausdruck "CB" Biomassen, die durch Verwendung von Monochlorbenzol und Dichlorbenzol an den Abbau von chlorierten Verbindungen adaptiert wurden. "MCB + DCB" bezeichnet ein Gemisch von Monochlor- und Dichlorbenzol.

In den Sequenzen b und c wurde die Abluft aus dem Bioreaktor 8B zusätzlich durch den Bioreaktor 8C geleitet, in dem das gleiche auf den Abbau von nicht chlorierten Verbindungen spezialisierte Mikroorganismenkonsortium angesiedelt war, und auf diese Weise eine Verdoppelung des Trägermaterialvolumens und eine Erhöhung der Verweilzeit erreicht. Wie ein Vergleich der Sequenzen a und b zeigt, konnte auf diese Weise der Wirkungsgrad trotz höherer Schadstoffkonzentration gesteigert werden, und wie Sequenz c zeigt, konnte auch das in einer weiteren Produktionskampagne anfallende Xylol mit der gleichen Biomasse problemlos und mit hohem Wirkungsgrad abgebaut werden. Bei Verwendung bloss eines Bioreaktors (8B), d.h. eines Trägervolumens von lediglich 25 m³, zum Abbau einer deutlich höheren Toluol-Konzentration (Sequenz d) wurde auf Strang B der Anlage zwar eine hohe Abbauleistung von etwa 42 g/m³·h erreicht; um aber ebenfalls einen hohen Wirkungsgrad zu erreichen, müsste offensichtlich das Trägervolumen und/oder die Verweilzeit erhöht werden. Auf Strang C der Anlage wurde die aus einer anderen Produktionskampagne anfallende, Monochlorbenzol und Dichlorbenzol enthaltende Abluft behandelt, ohne die auf den Abbau nicht chlorierter Verbindungen spezialisierte Biomasse zu ersetzen (Sequenz e). Hierbei wurde nur eine vergleichsweise geringe Abbauleistung und ein ungenügender Wirkungsgrad erreicht, die sich zudem mit zunehmender Betriebsdauer deutlich verschlechterten. Nach Inokulierung mit der auf den Abbau chlorierter Verbindungen spezialisierten Biomasse konnten anschliessend gemäss Sequenz f hohe und stabile Werte der Abbauleistung und des Wirkungsgrades erreicht werden.

**Tabelle 1**

| Sequenz | a | b | c | d | e | f |
|---|---|---|---|---|---|---|
| Betriebsdauer [h] | 504 | 312 | 504 | 360 | 96 | 264 |
| Trägervolumen [m³] | 25 | 50 | 50 | 25 | 25 | 25 |
| Biomasse | TEX | TEX | TEX | TEX | TEX | CB |
| Abgasstrom [m³/h] | 835 | 730 | 780 | 500 | 250 | 250 |
| Verweilzeit im Bioreaktor [s] | 108 | 247 | 231 | 180 | 360 | 360 |
| Schadstoff | Toluol | Toluol | Xylol | Toluol | MCB + DCB | MCB + DCB |
| mittlere Schadstoffkonzentration im Rohgas [mg/m³] | 920 | 1770 | 660 | 4200 | 890 | 680 |
| spezifische Filterbelastung [g/m³·h] | 31 | 26 | 10 | 84 | 9 | 7 |
| mittlere Schadstoffkonzentration im Reingas [mg/m³] | 180 | 230 | 40 | 2080 | 515 | 60 |
| Wirkungsgrad | 80% | 87% | 94% | 50% | 42% | 91% |

## Patentansprüche

1. Verfahren zur biologischen Behandlung der Gasemissionen aus mehreren und/oder multifunktionellen chemischen Produktionseinheiten, aus denen unterschiedliche flüchtige organische Verbindungen als Emissionen anfallen, dadurch gekennzeichnet, dass man die Gasemissionen an jeder Produktionseinheit separat erfasst und dass man
a) Gasemissionen A, die eine toxische, nicht oder nur schwer bioabbaubare flüchtige organische Verbindung enthalten, in einem Adsorber (2) an einem zur Adsorption dieser Verbindung geeigneten Material adsorbiert,
b) Gasemissionen D, die eine wasserlösliche, leicht bioabbaubare organische Verbindung enthalten, durch einen Wäscher (3) leitet, um die organische Verbindung mit Wasser auszuwaschen,
c) Gasemissionen B, die eine bioabbaubare, nicht chlorierte organische Verbindung enthalten, zusammenführt und über einen gemeinsamen Abluftstrang zusammen mit Luft in einen ersten Biorieselbettreaktor (8B) leitet, in welchem ein Biofilm aus mindestens einem zum Abbau der nicht chlorierten organischen Verbindung geeigneten Mikroorganismus auf einem inerten Trägermaterial angesiedelt ist, und
d) Gasemissionen C, die eine bioabbaubare, chlorierte organische Verbindung enthalten, zusammenführt und über einen gemeinsamen Abluftstrang zusamen mit Luft in einen zweiten Biorieselbettreaktor (8C) leitet, in welchem ein Biofilm aus mindestens einem zum Abbau der chlorierten organischen Verbindung geeigneten Mikroorganismus auf einem inerten Trägermaterial angesiedelt ist,
wobei das Verfahren ferner dadurch gekennzeichnet ist, dass in jedem der beiden Biorieselbettreaktoren (8B; 8C) zur Behandlung der Gasemissionen B bzw. C
e) das Trägermaterial und der Biofilm im Abstrom kontinuierlich mit Perkolationswasser berieselt werden,
f) das abfliessende Perkolationswasser als Pumpensumpf (10B; 10C) gesammelt und über eine zum oberen Ende des Biorieselbettreaktors führende Leitung (12B; 12C) mit Umwälzpumpe (11B; 11C) rezykliert wird,
g) dem Perkolationswasser je nach Bedarf Nährstoffe zudosiert werden und
h) dem Perkolationswasser des ersten und zweiten Biorieselbettreaktors (8B; 8C) regelmässig Mikroorganimen zudosiert werden, die auf den Abbau der nicht chlorierten bzw. chlorierten organischen Verbindung spezialisiert sind.

2. Verfahren nach Anspruch 1, dadurch gekennzeichnet, dass die dem Perkolationswasser des ersten und zweiten Biorieselbettreaktors (8B; 8C) regelmässig zudosierten Mikroorganimen in separaten Fermentern (14B; 14C) auf Minimalmilieu, in Gegenwart der abzubauenden nicht chlorierten bzw. chlorierten Verbindung als einziger Kohlenstoffquelle, kontinuierlich produziert werden.

3. Verfahren nach Anspruch 1 oder 2, dadurch gekennzeichnet, dass in der Umwelt vorkommende, aus einem mit der abzubauenden Verbindung kontaminierten Milieu isolierte Mikroorganismen verwendet werden.

4. Verfahren nach einem der Ansprüche 1 bis 3, dadurch gekennzeichnet, dass Mikroorganismen der Gattungen Pseudomonas, Nocardia, Alcaligenes, Arthrobacter, Xanthobacter, Comamonas, Rhodococcus, Geobacter, Geotrichum, Azoarcus, Sphingomonas, Aeromonas, Corynebacterium und/oder Burkholderia verwendet werden.

5. Verfahren nach einem der Ansprüche 1 bis 4, dadurch gekennzeichnet, dass die Gasemissionen B und C im Gleichstrom zum Perkolationswasser durch die Biorieselbettreaktoren (8B; 8C) geleitet werden.

6. Verfahren nach einem der Ansprüche 1 bis 4, dadurch gekennzeichnet, dass die Gasemissionen B und C in Intervallen abwechselnd im Gleichstrom oder im Gegenstrom zum Perkolationswasser durch die Biorieselbettreaktoren (8B; 8C) geleitet werden.

7. Verfahren nach einem der Ansprüche 1 bis 6, dadurch gekennzeichnet, dass in jedem der Abluftstränge für die Gasemissionen B und C dem Biorieselbettreaktor (8B; 8C) ein Adsorber (6B; 6C) mit Aktivkohle vorgeschaltet ist, um Konzentrationsschwankungen der flüchtigen organischen Verbindungen zu dämpfen.

8. Verfahren nach Anspruch 7, dadurch gekennzeichnet, dass in jedem der Abluftstränge für die Gasemissionen B und C dem Adsorber (6B; 6C) ein Wärmeaustauscher (5B; 5C) vorgeschaltet ist.

9. Verfahren nach Anspruch 8, dadurch gekennzeichnet, dass die Gasemissionen in den Wärmeaustauschern (5B; 5C) auf eine Temperatur von 20 bis 40°C eingestellt werden.

10. Verfahren nach Anspruch 8 oder 9, dadurch gekennzeichnet, dass in jedem der Abluftstränge für die Gasemissionen B und C dem Wärmeaustauscher (5B; 5C) ein Wäscher (4B; 4C) vorgeschaltet ist.

11. Verfahren nach einem der Ansprüche 1 bis 10, dadurch gekennzeichnet, dass jedem der Abluftstränge für die Gasemissionen B und C vor dem Biorieselbettreaktor (8B; 8C) bzw. vor dem Adsorber (6B; 6C) Luft zugeführt wird.

12. Verfahren nach Anspruch 11, dadurch gekennzeichnet, dass Luft in einer Menge zugeführt wird, dass die dem Biorieselbettreaktor (8B; 8C) zugeleitete Gesamtmenge an Gasemissionen und Luft konstant ist.

13. Verfahren nach einem der Ansprüche 1 bis 12, dadurch gekennzeichnet, dass die Gasemissionen B und C je über einen zentralen, unmittelbar vor dem Biorieselbettreaktor (8B; 8C) angeordneten Ventilator abgesaugt werden.

14. Verfahren nach einem der Ansprüche 1 bis 13, dadurch gekennzeichnet, dass als Trägermaterialien in den Biorieselbettreaktoren (8B; 8C) geregelte strukturierte Packungen mit eine spezifischen Oberfläche von mindestens 100 m²/m³ verwendet werden.

15. Verfahren nach einem der Ansprüche 1 bis 14, dadurch gekennzeichnet, dass das Perkolationswasser in den Biorieselbettreaktoren (8B; 8C) ausreichend rasch zirkuliert, um am Biofilm eine turbulente Strömung zu erzeugen.

16. Verfahren nach einem der Ansprüche 1 bis 15, dadurch gekennzeichnet, dass dem Perkolationswasser bei Bedarf Lauge oder Säure zudosiert wird, um den pH-Wert konstant zu halten.

17. Verfahren nach einem der Ansprüche 1 bis 16, dadurch gekennzeichnet, dass dem Perkolationswasser neben den in den Gasemissionen enthaltenen organischen Verbindungen keine Kohlenstoffquellen zudosiert werden.
